# FASCICULE DE BREVET EUROPEEN

(11) **EP 3 152 480 B1**
(45) Date de publication et mention de la délivrance du brevet: **24.02.2021**
(21) Numéro de dépôt: 15732782.6
(22) Date de dépôt: 20.05.2015
(51) Int. Cl.: F21S 41/24, F21S 41/63, F21S 41/675, F21S 43/243, B60Q 1/28

(54) **DISPOSITIF D'ECLAIRAGE A LENTILLE MOBILE POUR VEHICULE AUTOMOBILE**
BELEUCHTUNGSVORRICHTUNG MIT BEWEGLICHER LINSE FÜR KRAFTFAHRZEUG
LIGHTING DEVICE WITH MOBILE LENS FOR MOTOR VEHICLE

(30) Priorité: 03.06.2014 FR 1455010
(43) Date de publication de la demande: 12.04.2017
(73) Titulaire: PSA Automobiles SA, 78300 Poissy (FR)
(72) Inventeur: GONCALVES, Whilk Marcelino, 75013 Paris (FR); LE DALL, Christophe, 92150 Suresnes (FR)
(86) Numéro de dépôt international: PCT/FR2015/051328
(87) Numéro de publication internationale: WO 2015/185821

(56) Documents cités:
- EP-A1- 2 143 994
- EP-A1- 2 597 357
- EP-A2- 2 273 186
- EP-A2- 2 423 047
- EP-A2- 2 693 105
- WO-A1-2013/131114
- WO-A1-2015/107273
- DE-A1-102011 104 055
- DE-A1-102012 103 310
- FR-A1- 2 882 589
- US-A1- 2013 272 009

## Description

L'invention a trait au domaine de l'éclairage des véhicules automobile. Elle concerne, plus précisément, un dispositif d'éclairage pour un véhicule automobile.

Sur les véhicules modernes tendent à se généraliser des dispositifs permettant d'agrémenter l'éclairage de sorte à en améliorer l'efficacité, la portée, l'esthétique, ou encore pour limiter l'éblouissement des tiers.

En particulier, depuis quelques années, un nombre croissant de véhicules (pour l'instant essentiellement au niveau premium mais la descente en gamme a déjà été amorcée) ont été équipés de feux de circulation diurnes, plus généralement connus sous l'acronyme anglo-saxon DRL (Daytime Runing Lamp) destinés à accroître la visibilité du véhicule et qui s'éclairent automatiquement à la mise au contact.

La réglementation ECE R87 et ECE R48 §6.19 impose que les distributions lumineuses engendrées par les DRL puissent couvrir des distributions angulaires minimales dans l'espace afin que le véhicule et ses déplacements soient visibles par les autres acteurs de la route sur la route en plein jour.

Cette fonction d'éclairage DRL doit se distinguer des autres fonctions d'éclairage, prévues pour être activées dans des conditions extérieures de luminosité faible, et être activée en permanence en plein jour.

La technologie LED apporte un solution organique appropriée pour obtenir un bon compromis entre durée de vie et souplesse du design.

La photométrie de la fonction DRL est une fonction de signalisation, avec une grille photométrique spécifiée par la réglementation. En particulier la distribution lumineuse du DRL est centrée dans l'axe. Cette fonction de signalisation a des intensités lumineuses sensiblement plus faibles que pour les fonctions d'éclairages telles que les feux de route ou de croisement.

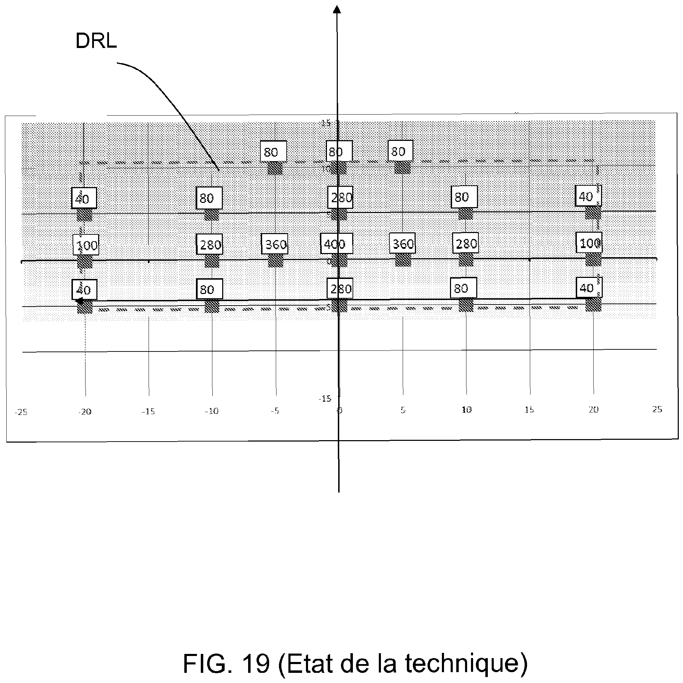

La figure 19 illustre la grille de distribution photométrique d'un DRL. Cette grille définie un rectangle, délimité par une ligne fermée discontinue, représentative de la surface d'illumination de la fonction d'éclairage DRL à l'avant du véhicule.

Les directions H = 0° et V = 0° correspondent aux axes de référence respectivement horizontal et vertical.

Les unités dans les axes correspondent aux angles d'observation en degrés.

Le rectangle s'inscrit dans cette grille en étant symétrique suivant la direction horizontale, par rapport à l'axe vertical V = 0°, entre - 20° et + 20°. Il s'inscrit entre - 5° et + 10° selon la direction verticale.

Un certain nombre de points caractéristiques sont représentés avec leurs intensités minimales exprimées en candéla : le point caractéristique le plus lumineux (400 Cd) étant situé dans l'axe optique à l'intersection des axes horizontaux et verticaux.

Les feux de circulation DRL à l'avant du véhicule, sont traditionnellement des organes statiques dépourvus de mouvements de rotation et/ou de translation.

De tels organes sont notamment décrits le document EP1637397A.

La visibilité des organes de signalisation est réduite au fur et à mesure que les observateurs extérieurs au véhicule (autres conducteurs ou piétons) se trouvent éloignés de l'axe optique/Iongitudinal du véhicule ce qui peut nuire à leur sécurité.

De même, des feux directifs ont été proposés, qui permettent par exemple d'éclairer les bas-côtés de la route ou d'adapter la direction principale d'éclairage aux changements de direction du véhicule.

On connaît ainsi un dispositif d'éclairage comprenant :
- un châssis ;
- une optique comprenant une monture et une lentille solidaire de la monture, la lentille ayant un dioptre avant et un dioptre arrière opposés reliés par une tranche, la monture étant montée en rotation par rapport au châssis ;
- un bloc lumineux muni d'une source lumineuse principale ; et
- un mécanisme d'entraînement de l'optique en rotation, propre à placer l'optique selon une orientation dite de route dans laquelle le dioptre avant est tourné vers une direction dite avant.

Un tel dispositif, notamment connu du document FR 2 973 861, permet de procurer un éclairage de route adaptatif selon les conditions de roulage, mais il n'est pas conçu pour procurer un éclairage de signalisation.

De fait les feux conventionnels séparent généralement les fonctions d'éclairage de route et de signalisation, au détriment de la compacité des blocs de phare, au point que pour en affiner l'esthétique les constructeurs proposent aujourd'hui des véhicules ayant des blocs de phares dédiés à l'éclairage de route et des blocs de phares dédiés à l'éclairage de signalisation.

On connait également du document WO2015107273, un dispositif d'éclairage pour véhicule automobile, qui comprend en outre une optique munie d'une source lumineuse secondaire, apte à éclairer la tranche de la lentille et un mécanisme d'entraînement qui est agencé pour placer l'optique selon une orientation dite de signalisation dans laquelle la tranche est tournée vers l'avant.

Un objectif de la présente invention est de réaliser, à partir de l'équipage mobile décrit ci-dessus, un feu de circulation diurne DRL « dynamique » permettant d'optimiser la visibilité du véhicule par les piétons et autres véhicules dans l'environnement du véhicule porteur.

A cet effet, la présente invention propose, un véhicule conforme à l'objet de la revendication 1.

Diverses caractéristiques supplémentaires peuvent être prévues, seules ou en combinaison :
- la source lumineuse secondaire est montée dans la lentille.
- la source lumineuse secondaire est montée à distance de la tranche, les dioptres formant un guide d'onde pour canaliser vers la tranche le flux lumineux issu de la source lumineuse secondaire ;
- le bloc lumineux comprend un réflecteur définissant une face interne concave réfléchissante en regard de laquelle la source lumineuse principale est placée ;
- dans l'orientation de route, le dioptre arrière de la lentille est placé en regard de la face interne du bloc lumineux ;
- l'orientation de signalisation est décalée angulairement, par rapport à l'orientation de route, d'un angle de 180° environ ;
- le dispositif comprend une armature montée en rotation par rapport au châssis autour d'un premier axe vertical ;
- l'optique est montée en rotation par rapport à l'armature autour d'un deuxième axe horizontal ;
- l'optique est montée en rotation par rapport au bloc lumineux autour d'un troisième axe horizontal écarté du deuxième axe horizontal ;
- le mécanisme d'entraînement comprend une bielle munie d'un arbre par lequel la bielle est montée en rotation par rapport au châssis autour d'un quatrième axe vertical écarté du premier axe vertical, et d'un levier coudé par rapport à l'arbre, le levier de la bielle étant accouplé au bloc lumineux par une liaison rotule.
- le dispositif comprend en outre une motorisation couplée au mécanisme d'entraînement.

D'autres objets et avantages de l'invention apparaîtront à la lumière de la description d'un mode de réalisation, faite ci-après en référence aux dessins annexés dans lesquels :
- la figure 1 est une vue en perspective montrant un véhicule automobile équipé d'un bloc de phare intégrant un dispositif d'éclairage mobile ;
- la figure 2 est une vue en perspective montrant un dispositif d'éclairage mobile, dans une position de route ;
- la figure 3 est une vue en coupe longitudinale du dispositif d'éclairage de la figure 2, dans la position de route ;
- les figures 4 et 5 sont des vues similaires en perspective illustrant le retournement du dispositif d'éclairage vers une position de signalisation ;
- la figure 6 est une vue en perspective montrant le dispositif d'éclairage de la figure 2 dans sa position de signalisation ;
- la figure 7 est une vue en coupe longitudinale du dispositif d'éclairage de la figure 6, dans sa position de signalisation ;
- les figures 8A, 8B et 8C sont des vues de face illustrant trois positions du dispositif d'éclairage pour permettre un balayage lumineux selon l'orientation du véhicule ;
- les figures 9A, 9B et 9C sont des vues de dessus du dispositif d'éclairage, dans les positions respectives des figures 8A, 8B et 8C ;
- la figure 10 est une vue en perspective illustrant le balayage lumineux, tel que projeté sur une surface plane ;
- la figure 11 est une vue similaire à la figure 6, illustrant un deuxième mode de réalisation ;
- la figure 12 est une vue similaire à la figure 7, illustrant le dispositif d'éclairage dans son deuxième mode de réalisation ;
- la figure 13 est une vue en perspective montrant le dispositif d'éclairage dans son orientation de route, et illustrant un circuit électrique d'alimentation d'une source lumineuse portée par le bloc optique ;
- la figure 14 est une vue en perspective montrant le dispositif d'éclairage de la figure 13 dans son orientation de signalisation ;
- la figure 15 est une vue partielle de côté du dispositif d'éclairage dans son orientation de route, illustrant une variante de réalisation du circuit électrique ;
- la figure 16 est une vue similaire à la figure 16, dans l'orientation de signalisation ;
- la figure 17 est une vue en perspective illustrant un ensemble comprenant plusieurs dispositifs d'éclairage accouplés en mode éclairage de route ;
- la figure 18 est une vue en perspective illustrant un ensemble comprenant plusieurs dispositifs de signalisation accouplés en mode DRL ;
- la figure 19, déjà décrite, illustre la grille de distribution photométrique de signalisation d'un DRL ;
- la figure 20 illustre une première configuration des dispositifs de signalisation en mode DRL selon l'invention ; et
- la figure 21 illustre une deuxième configuration des dispositifs en mode DRL selon l'invention.

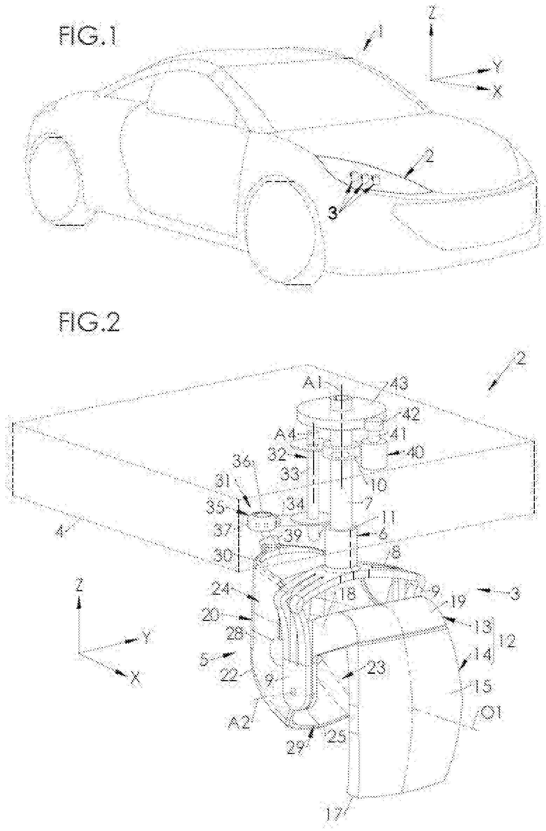

Sur la figure 1 est représenté un véhicule **1** automobile équipé, sur une face avant, d'au moins un bloc **2** de phare intégrant au moins un dispositif **3** d'éclairage mobile.

On définit par rapport au véhicule **1** (et donc par rapport au bloc de phare) un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Le dispositif **3** d'éclairage est agencé pour adopter plusieurs configurations ; il comprend, en premier lieu, un châssis **4** qui, lorsque le bloc **2** phare est monté sur le véhicule **1,** est fixe par rapport à celui-ci. La forme du châssis **4** est quelconque. Sur les dessins, on a représenté le châssis **4** sous forme d'une plaque aux fins de clarté et de simplification de l'exposé.

Le dispositif **3** d'éclairage comprend, en deuxième lieu, un équipage **5** mobile par rapport au châssis **4.**

L'équipage **5** mobile comprend une armature **6** montée en rotation par rapport au châssis **4** autour d'un premier axe **A1.** Dans ce qui suit, on décrète par convention, pour la clarté de l'exposé, que ce premier axe **A1** est vertical (suivant Z). Cette orientation correspond d'ailleurs à un mode préféré de réalisation. Cependant, ce premier axe **A1** pourrait être orienté de manière quelconque dans le plan vertical YZ. En particulier, le premier axe **A1** pourrait être horizontal (suivant Y).

Selon un mode de réalisation préféré illustré sur les figures, l'armature **6** se présente sous forme d'un étrier comprenant un arbre **7** principal définissant le premier axe **A1** vertical, une âme **8** sensiblement horizontale solidaire de l'arbre **7** principal et deux bras **9** verticaux qui s'étendent de part et d'autre de l'âme **8,** à partir d'extrémités latérales de celle-ci. Dans l'orientation illustrée, les bras **9** s'ouvrent vers le bas. Néanmoins, cette orientation est arbitraire, et les bras **9** pourraient s'ouvrir à l'inverse vers le haut (en d'autres termes, en maintenant la verticalité de l'axe **A1,** on pourrait retourner l'ensemble de l'équipage **5** mobile).

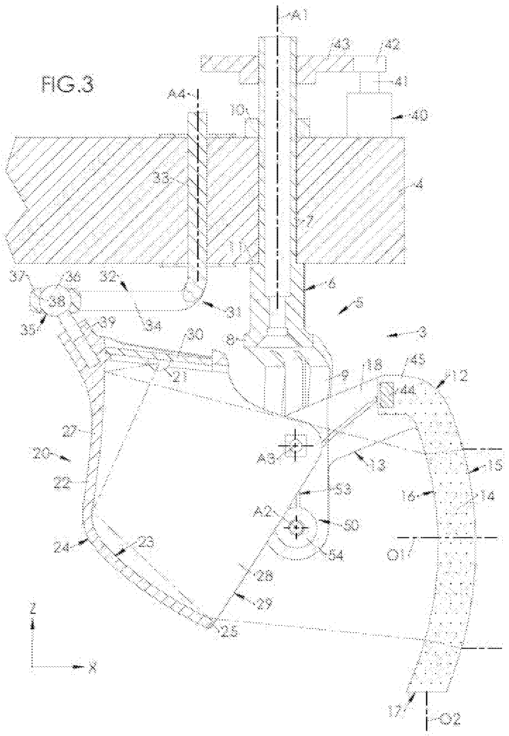

Selon un mode de réalisation illustré notamment sur la figure 3, la fixation de l'arbre **7** principal sur le châssis **4** est réalisée au moyen d'un écrou **10** vissé sur une partie supérieure de l'arbre **7,** le châssis **4** étant pris en sandwich entre l'écrou **10** et un épaulement **11** formé dans une partie inférieure de l'arbre **7.**

L'équipage **5** mobile comprend également une optique **12** comprenant une monture **13** et une lentille **14** solidaire de la monture **13.** La lentille **14** est réalisée dans un matériau transparent. Il s'agit de préférence d'une matière plastique synthétique, par exemple un polyacrylate, qui offre l'avantage d'offrir de bonnes propriétés optiques (notamment une bonne transparence) et mécaniques (notamment une bonne rigidité).

La lentille **14** présente un dioptre **15** avant (en l'espèce convexe) qui définit pour la lentille **14** un axe **O1** optique primaire, et un dioptre **16** arrière (en l'espèce concave) opposé. Le dioptre **15** avant et le dioptre **16** arrière sont reliés par une tranche **17** qui forme un dioptre latéral définissant un axe **O2** optique secondaire. Dans l'exemple illustré, le contour de la lentille **14** est sensiblement rectangulaire, mais cette forme est donnée à titre seulement illustratif.

Selon un mode de réalisation préféré, les dioptres **15, 16** sont agencés de manière que l'axe **O1** optique primaire et l'axe **O2** optique secondaire soient perpendiculaires et s'étendent conjointement dans un plan vertical contenant également le premier axe **A1** de rotation de l'armature **6.**

La monture **13** est de préférence métallique ; elle comprend deux branches **18** latérales (qui, comme dans l'exemple illustré, peuvent être coudées), reliées par une barre **19** transversale dans laquelle est ancrée la lentille **14.**

Par ses branches **18,** la monture **13** est montée en rotation par rapport à l'armature **6** autour d'un deuxième axe **A2** horizontal. Ce deuxième axe **A2** de rotation est par exemple formé par des pivots (non représentés) reliant les branches **18** aux bras **9,** à une extrémité de ceux-ci. De même, le deuxième axe **A2** s'étend à une extrémité des branches **18** opposée à la barre **19** transversale.

L'équipage **5** mobile comprend, par ailleurs, un bloc **20** lumineux muni d'une source **21** lumineuse principale, monté en regard du dioptre **16** arrière de la lentille **14.** Ce bloc **20** lumineux comprend un réflecteur **22** définissant une face **23** interne concave réfléchissante en regard de laquelle la source **21** lumineuse principale est placée pour l'éclairer, et une face **24** externe convexe opposée, la face **23** interne et la face **24** externe étant reliées par une tranche **25.**

Le caractère réfléchissant de la face **23** interne est par exemple procuré par un revêtement **26** argenté.

La source **21** lumineuse principale est par exemple une ampoule à gaz (typiquement halogène ou au xénon), ou encore à diode(s) électroluminescente(s) ou LED.

Comme illustré sur les figures, et plus particulièrement sur la figure 3, le réflecteur **22** comprend une paroi **27** de fond et deux parois **28** latérales qui s'étendent verticalement, sensiblement parallèlement l'une à l'autre, de part et d'autre de la paroi **27** de fond. Les parois **28** latérales définissent conjointement, à l'opposé de la paroi **27** de fond, une ouverture **29** par laquelle passe la lumière émise par la source **21** lumineuse principale et réfléchie par la face **23** interne du réflecteur **22.**

Comme on le voit également sur la figure 3, le réflecteur **22** comprend une paroi **30** supérieure, éventuellement ajourée, sur laquelle la source **21** lumineuse principale est montée pour éclairer la face **23** interne du réflecteur **22.**

Le bloc **20** lumineux est monté en rotation, par rapport à la monture **13** de l'optique **12,** autour d'un troisième axe **A3** horizontal écarté du deuxième axe **A2.** Sur le réflecteur **22,** le troisième axe **A3** se trouve du côté de l'ouverture **29.** Sur la monture **13,** le troisième axe **A3** s'étend dans une zone intermédiaire entre l'extrémité des branches **18** et la barre **19** transversale, de préférence au niveau d'un coude formé par chaque branche **18.**

La rotation de l'armature **6** autour du premier axe **A1** vertical permet de faire pivoter l'optique **12** (et donc la lentille **14** et son axe **O1** optique primaire) par rapport au châssis **4** autour du premier axe **A1** vertical.

La rotation de la monture **13** autour du deuxième axe **A2** horizontal permet par ailleurs de faire pivoter l'optique **12** (et donc la lentille **14** et son axe **O1** optique primaire) par rapport au châssis **4** autour du deuxième axe **A2** horizontal.

Le dispositif **3** d'éclairage comprend un mécanisme **31** d'entraînement de la monture **13** en rotation, intégré à l'équipage **5** mobile et qui comprend des moyens de couplage de la rotation de l'armature **6** autour du premier axe **A1** à la rotation de l'optique **12** autour du deuxième axe **A2** pour réaliser une synchronisation de ces deux rotations.

Comme nous allons le voir, ce couplage est ici réalisé par l'intermédiaire du bloc **20** lumineux.

Le mécanisme **31** d'entraînement comprend une bielle **32** munie d'un arbre **33** par lequel la bielle **32** est montée en rotation par rapport au châssis **4** autour d'un quatrième axe **A4** vertical écarté du premier axe **A1,** et d'un levier **34** coudé par rapport à l'arbre **33,** ce levier **34** étant accouplé au bloc **20** lumineux par une liaison **35** rotule (ci-après plus simplement dénommée rotule).

Selon un mode de réalisation illustré sur les figures, la rotule **35** comprend, d'une part, une sphère **36** portée par le bloc **20** lumineux, et d'autre part un œilleton **37** à siège **38** sphérique porté par le levier **34** de la bielle **32** et qui coopère avec la sphère **36.** Cette structure est donnée à titre d'exemple ; elle pourrait être inversée sans modification du fonctionnement.

Dans l'exemple illustré, la sphère **36** est montée sur une partie **39** du réflecteur **22** formée en saillie sur la face **24** externe de celui-ci.

Le levier **34** s'étend de préférence dans un plan horizontal, mais cette configuration n'est pas indispensable, l'essentiel étant que l'ancrage de la bielle **32** sur le bloc **20** lumineux soit excentré par rapport au premier axe **A1** de rotation vertical.

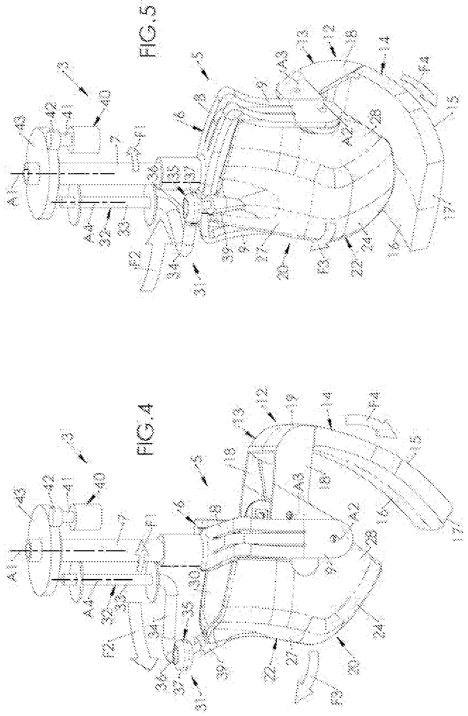

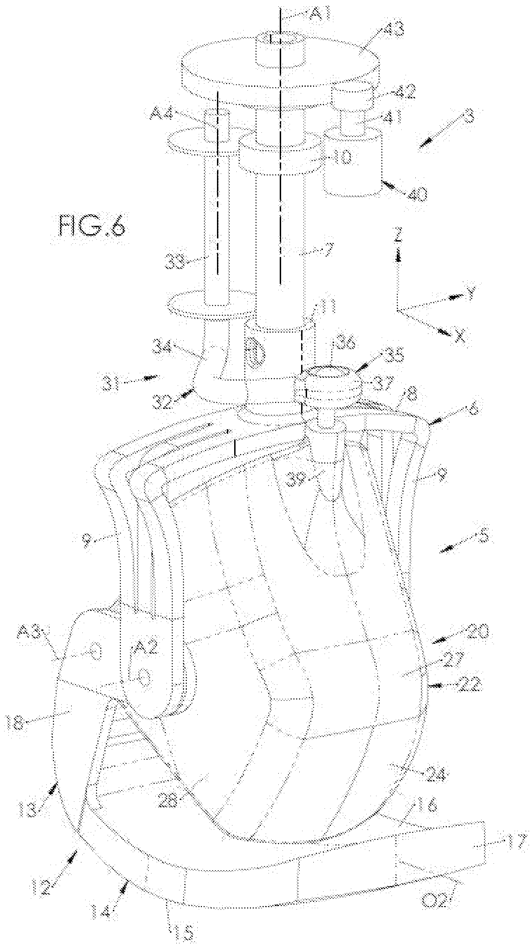

Pour accroître le débattement angulaire de l'ensemble, le levier **34** de la bielle **32** est de préférence courbé, comme cela est bien visible notamment sur les figures 5 et 6.

Le dispositif **3** comprend, en outre, une motorisation **40** couplée à l'armature **6** (ou à la bielle **32**) pour l'entraîner en rotation autour de son axe **A1** (respectivement **A4**) en fonction notamment de conditions de roulage prédéterminées, qui seront précisées ci-après. Selon un mode de réalisation préféré illustré sur les figures, la motorisation **40** est couplée à l'armature **6.** Dans l'exemple illustré, la motorisation **40** comprend un arbre **41** de sortie muni d'un pignon **42** qui engrène une roue **43** dentée solidaire de l'arbre **7** principal.

Dans une configuration dite de route, illustrée sur les figures 2, 3, 8B, 9B, 10 et 13, l'équipage **5** mobile est agencé pour procurer un éclairage de route suivant l'axe **O1** optique primaire.

Dans cette configuration :
- l'optique **12** (et donc la lentille **14**) adopte une orientation dite de route, dans laquelle le deuxième axe **A2** et le troisième axe **A3** s'étendent transversalement, parallèlement à Y, dans un même plan vertical (parallèle à YZ), et dans laquelle le dioptre **15** avant est tourné dans une direction dite avant (correspondant à une direction de déplacement du véhicule **1**), l'axe **O1** optique primaire s'étendant horizontalement, parallèlement à l'axe X tandis que l'axe **O2** optique secondaire s'étend sensiblement verticalement (parallèlement à l'axe Z) ;
- l'extrémité de la bielle **32** portant l'œilleton **37** s'étend au plus loin de l'arbre **7** principal, c'est-à-dire du premier axe **A1** vertical,
- la face **23** interne du réflecteur **22** s'étend en regard du dioptre **16** arrière de la lentille **14,** de sorte à permettre un éclairage vers l'avant parallèlement à l'axe **O1** optique primaire, comme suggéré par les lignes en trait mixte sur la figure 3, qui matérialisent des rayons lumineux issus de la source **21** lumineuse principale et successivement réfléchis par la face **23** interne du réflecteur **22** et réfractés par la lentille **14** au passage du dioptre **16** arrière et du dioptre **15** avant.

Sous l'action de la motorisation **40,** l'arbre **7** principal est entraîné en rotation autour du premier axe **A1** vertical (flèche **F1,** figures 4 et 5). Cette rotation entraîne la rotation conjointe de l'optique **12** et du bloc **20** lumineux autour du premier axe **A1** vertical. La sphère **36** est cependant astreinte, par la rotule **35,** à décrire une trajectoire circulaire dans un plan horizontal (balayée par l'extrémité du levier **34**), centrée sur le quatrième axe **A4** vertical (flèche **F2,** figures 4 et 5) - et donc excentrée par rapport à l'axe **A1.** La rotation du bloc **20** lumineux autour du premier axe **A1** vertical provoque par conséquent le déplacement de la sphère **36** sur sa trajectoire circulaire, ce qui la rapproche du premier axe **A1** vertical et provoque le basculement propre du bloc **20** lumineux autour d'un axe horizontal passant par la sphère **36** et parallèle aux axes **A2** et **A3** (flèche **F3,** figures 4 et 5).

Il en résulte une poussée exercée par le bloc **20** lumineux sur le troisième axe **A3** horizontal, ce qui provoque le basculement de l'optique **12** autour du deuxième axe **A2** horizontal, autour duquel le troisième axe **A3** (et donc la monture **13**) est en effet astreint à se déplacer en décrivant une trajectoire circulaire.

Il résulte de cette cinématique deux rotations conjointes et synchrones de l'optique **12** par rapport au châssis **4,** d'une part autour du premier axe vertical **A1** et d'autre part autour du deuxième axe **A2** horizontal.

La rotation autour du premier axe **A1** vertical peut être effectuée, à partir de la configuration de route, sur une amplitude angulaire de 180°, ce qui place l'équipage **5** mobile dans une configuration dite de signalisation dans laquelle :
- l'armature **6** a effectué un demi-tour autour de son axe **A1** de rotation ;
- la bielle **32** a également effectué un demi-tour autour de son axe **A4** de rotation, ce qui amène l'œilleton **37** au plus près de l'arbre 7 principal (et donc du premier axe **A1** vertical) ;
- l'optique **12** (et donc la lentille **14**) a effectué une rotation d'un demi-tour autour du premier axe **A1** vertical combinée à une rotation d'un quart de tour autour du deuxième axe **A2** horizontal, ce qui la place dans une orientation dite de signalisation dans laquelle la tranche **17** est tournée vers l'avant, l'axe **O2** optique secondaire étant horizontal et parallèle à l'axe X, tandis que l'axe **O1** optique primaire s'étend sensiblement verticalement (parallèlement à l'axe Z).

Cette architecture mobile procure les avantages suivants :
- simplicité, grâce à l'association des quatre axes **A1, A2, A3, A4** de rotation et de la rotule **35,**
- efficacité, les mouvements relatifs de l'armature **6,** du bloc **20** lumineux et de l'optique **12** étant précis,
- légèreté et compacité, grâce au faible nombre de pièces et à la présence d'une seule motorisation **40.**

En outre, cette architecture permet de réaliser plusieurs fonctions.

Une première fonction est une alternance entre un éclairage de route et un éclairage de signalisation.

Pour réaliser cette fonction, l'optique **12** est munie d'une source **44** lumineuse secondaire, apte à éclairer la tranche **17** de la lentille **14.**

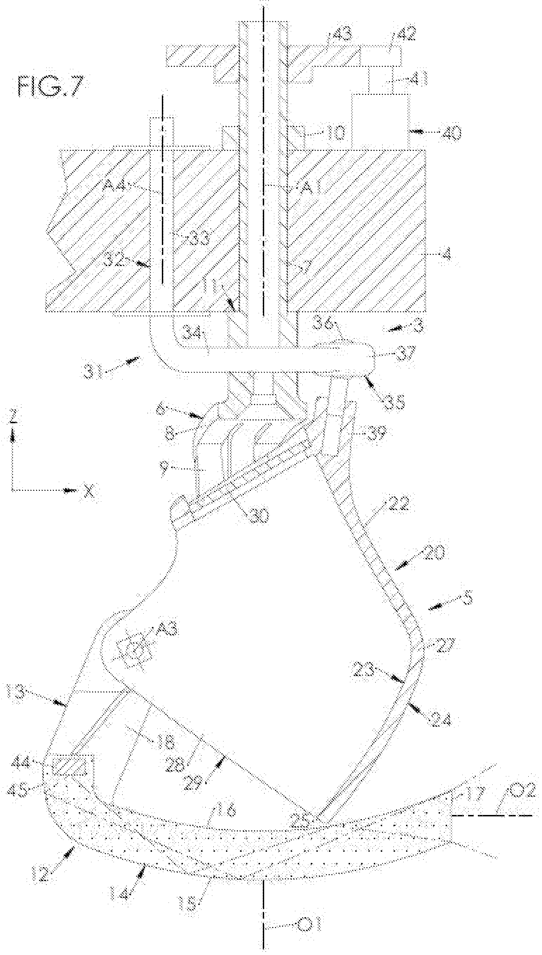

Selon un mode préféré de réalisation, la source **44** lumineuse secondaire est montée dans la lentille **14.** Plus précisément, et comme cela est visible en particulier sur les figures 5 et 7, la source **44** lumineuse secondaire est montée à distance de la tranche **17,** par exemple dans un bord **45** recourbé de la lentille **14** qui s'étend entre les branches **18,** les dioptres **15, 16** formant un guide d'onde pour canaliser vers la tranche **17** le flux lumineux issu de la source **44** lumineuse secondaire, comme illustré sur la figure 7 où l'on a matérialisé en trait mixte certains rayons lumineux issus de la source **44** lumineuse secondaire, réfléchis en incidence rasante par le dioptre **15** avant et le dioptre **16** arrière de la lentille **14** et transmis sous forme de lumière diffuse par la tranche **17.**

Ainsi on obtient tantôt, dans la configuration de route, un éclairage directif, puissant, dirigé selon l'axe **O1** optique primaire de la lentille **14** et permettant d'éclairer la route devant le véhicule **1,** tantôt, dans la configuration de signalisation, un éclairage diffus, relativement doux, par la tranche **17** de la lentille **14,** permettant de réaliser une lanterne signalant la position du véhicule **1** par exemple de jour ou pour créer, par exemple par association avec d'autres dispositifs 3 d'éclairage, une signature lumineuse. La commande de la rotation peut être effectuée de manière automatique au moyen d'un détecteur de luminosité relié, via un calculateur, à la motorisation **40,** et qui selon les conditions de luminosité ambiante place le dispositif **3** en configuration de signalisation lorsque la luminosité est importante (signalisation diurne), ou en configuration de route lorsque la luminosité est faible (éclairage nocturne ou de tunnel).

Une deuxième fonction est un balayage lumineux de l'environnement routier (route, bas-côtés, animaux, piétons, etc.) selon les conditions de roulage, et en particulier selon l'orientation du véhicule **1** (notamment selon le lacet, c'est-à-dire la rotation autour de l'axe Z, que le véhicule **1** effectue lors des changements de direction).

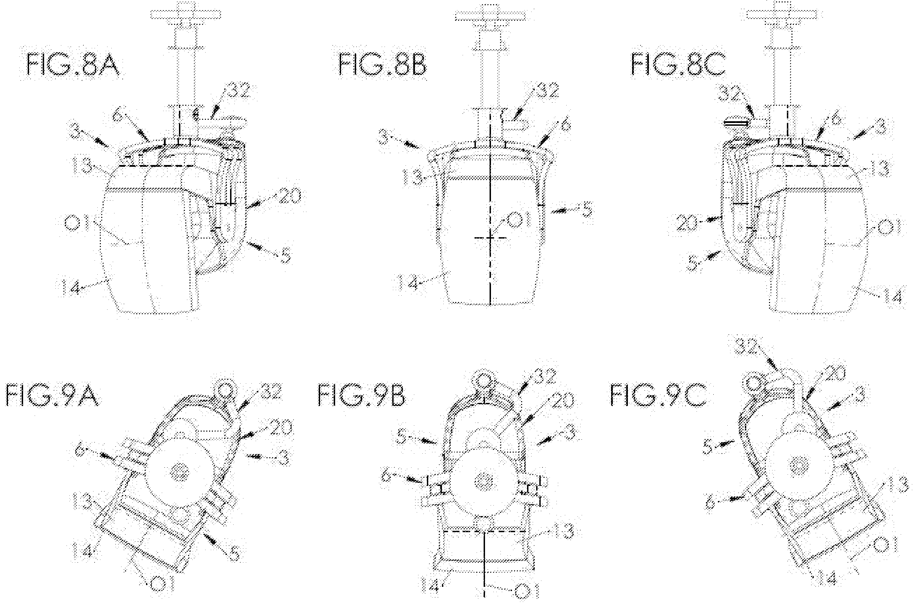

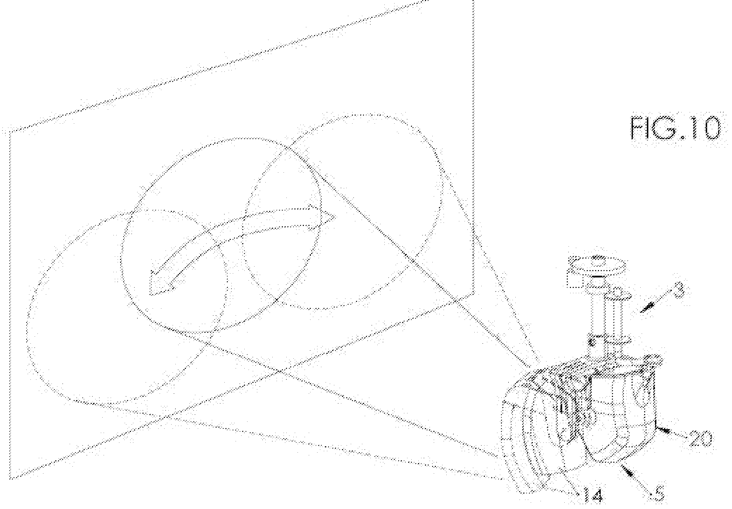

A cet effet, la motorisation **40** peut être asservie à l'orientation du véhicule **1** et entraîner l'équipage **5** mobile en rotation dans un sens ou dans l'autre autour du premier axe **A1,** pour éclairer des zones latérales de l'environnement routier. L'amplitude du mouvement peut être limitée (par exemple de quelques degrés), comme illustré sur les figures 8A, 8C, 9A, 9C ainsi que sur la figure 10 où l'on a représenté sur un plan fictif perpendiculaire à l'axe **O1** optique primaire dans l'orientation de route de l'optique **12** :
- en trait plein, l'équipage **5** mobile en configuration de route, et le faisceau produit par la lentille **14,** dirigé vers l'avant,
- en pointillés, la lentille **14** ayant subi une rotation limitée, et le faisceau produit par celle-ci, décalé latéralement dans un sens ou dans l'autre.

Dans l'exemple illustré l'amplitude angulaire du balayage est de l'ordre de ±20°, mais cette valeur n'est pas limitative.

Une troisième fonction est une fonction de signalisation procurée par le bloc **20** lumineux lui-même.

A cet effet, le réflecteur **22** est réalisé dans un matériau diffusant optiquement, c'est-à-dire apte à retransmettre sensiblement dans toutes les directions, de manière diffuse, un flux lumineux qu'il reçoit. On qualifie fréquemment ce type de matériau d'opalin, en référence à l'opale qui, éclairée, diffuse la lumière en procurant un effet laiteux.

On peut par exemple réaliser le réflecteur **22** dans une matière plastique transparente chargée d'un pigment (notamment un pigment blanc) qui rend la matière translucide et diffusante sans toutefois la rendre opaque.

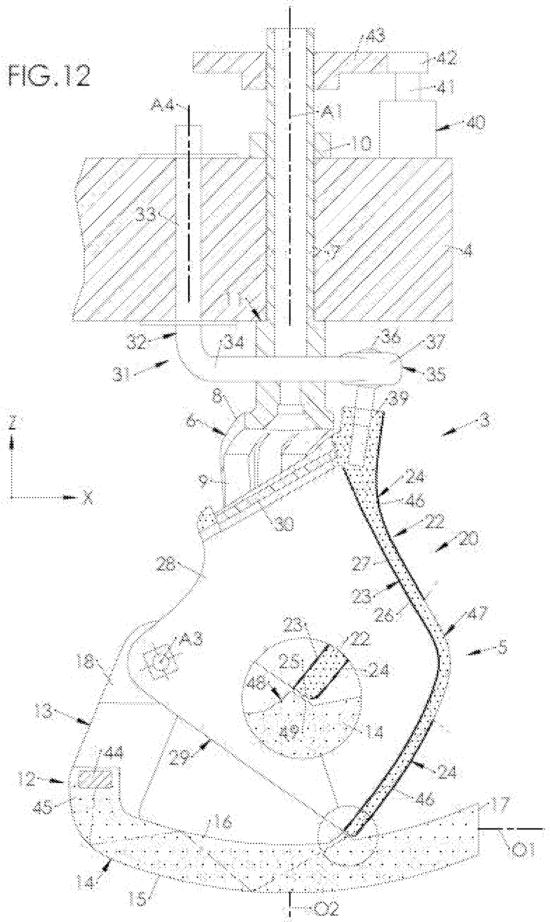

Comme illustré sur la figure 12, la face **24** externe est couverte d'un revêtement **46** opaque qui s'étend autour d'une zone **47** dite de diffusion non revêtue. Lorsque le réflecteur **22** est éclairé par la tranche **25** au moyen d'une source lumineuse, la lumière est transmise par la matière du réflecteur **22** en étant canalisée entre les revêtements **26, 46** (matérialisés sur la figure 12 par des traits épais), puis diffusée par la zone **47** de diffusion.

L'éclairage procuré est de puissance faible ou moyenne ; il suffit néanmoins pour réaliser une fonction de signalisation révélant la position du véhicule 1, et/ou une fonction esthétique selon les contours de la zone **47** de diffusion. Celle-ci peut ainsi être calquée sur un logo ou encore une inscription caractérisant par exemple une marque ou un slogan.

La réalisation de la zone **47** de diffusion peut être réalisée par masquage lors de l'application du revêtement **46** sur la face **24** externe du réflecteur **22,** au moyen d'un masque au contour de la zone **47** de diffusion, appliqué sur la face **24** externe, ou encore par enlèvement de matière (typiquement par gravure, notamment au laser) après application du revêtement **46.**

L'éclairage de la tranche **25** du réflecteur **22** peut être réalisé par une source lumineuse montée en permanence au droit de la tranche **25.** Cependant, suivant un mode préféré de réalisation, l'éclairage est procuré par la source **44** lumineuse secondaire portée par l'optique **12,** et la lentille **14** est munie d'un prisme **48** agencé pour transmettre au moins une partie du flux lumineux issu de la source **44** lumineuse secondaire. A cet effet, le prisme **48** est positionné sur la lentille **14** de manière à s'étendre au droit de la tranche **25** du réflecteur lorsque l'équipage **5** mobile est en configuration de signalisation, l'optique **12** étant dans son orientation de signalisation.

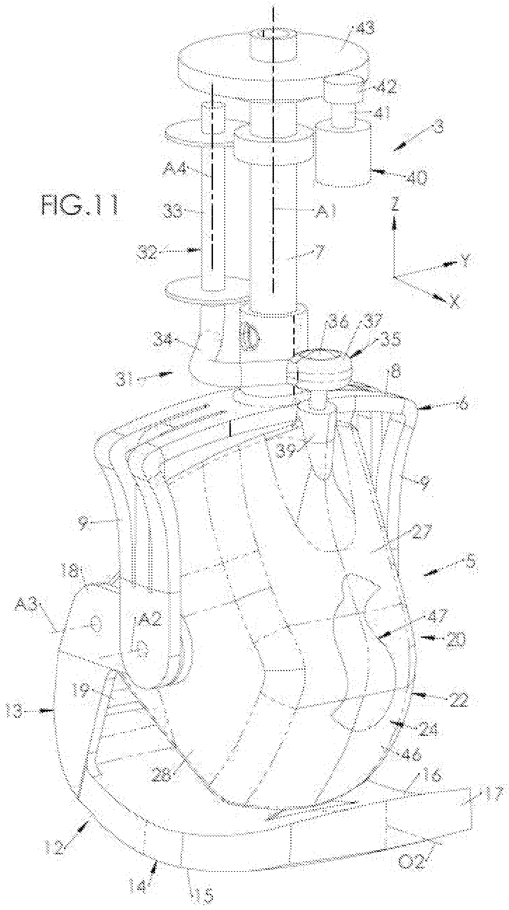

Comme on le voit bien sur les figures 11 et 12, le prisme **48** est formé dans la masse de la lentille **14,** en saillie sur le dioptre **16** arrière dans une zone qui, dans l'orientation de signalisation, s'étend au voisinage de la tranche **25** du réflecteur **22.**

Comme on le voit mieux encore sur le médaillon de détail de la figure 12, le prisme **48** est muni d'un dioptre **49** qui, en position de signalisation, s'étend sensiblement parallèlement à la tranche **25** du réflecteur **22** pour permettre une transmission efficace du flux lumineux de la lentille **14** au réflecteur **22.** Sur la figure 12, le trajet du flux lumineux est matérialisé par la ligne brisée en trait mixte, qui rend compte des réflexions successives subies par les rayons lumineux issus de la source **44** lumineuse secondaire, successivement sur les parois de la lentille **14** puis sur celles du réflecteur **22.**

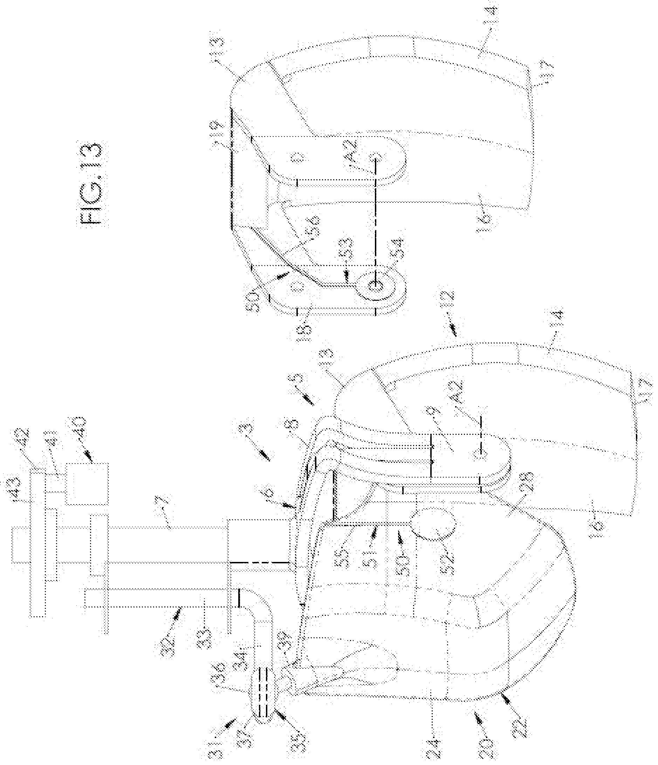

On a par ailleurs représenté sur les figures 13 à 16 des agencements permettant de réaliser l'alimentation électrique de la source **44** lumineuse secondaire mettant à profit la mobilité de l'optique **12.**

A cet effet, le dispositif **3** d'éclairage comprend un circuit **50** électrique d'alimentation de la source **44** lumineuse secondaire, subdivisé en deux brins, à savoir :
- un premier brin **51** porté par le bloc **20** lumineux ou par l'armature **6,** et dont une extrémité définit une première borne **52** raccordée à une alimentation (non représentée sur les dessins), et
- un deuxième brin **53** porté par l'optique **12** et dont une extrémité définit une deuxième borne **54** raccordée à la source **44** lumineuse secondaire.

L'agencement du circuit **50** électrique est tel qu'en configuration de signalisation de l'équipage **5** mobile, la source **44** lumineuse secondaire est alimentée en courant, ce qui permet d'éclairer la tranche **17** de la lentille **14** et, lorsque celle-ci est pourvue d'un prisme **48,** la tranche **25** du réflecteur **22,** tandis qu'en configuration de route la source **44** lumineuse secondaire est privée de courant.

Plus précisément, les brins **51, 53** du circuit **50** électrique sont organisés de manière que la deuxième borne **54** soit :
- écartée de la première borne **52** dans la configuration de route (ce qui ouvre le circuit **50** électrique et coupe l'alimentation de la source **44** lumineuse secondaire),
- en contact avec la première borne **52** dans la configuration de signalisation (ce qui ferme le circuit **50** électrique et alimente la source **44** lumineuse secondaire).

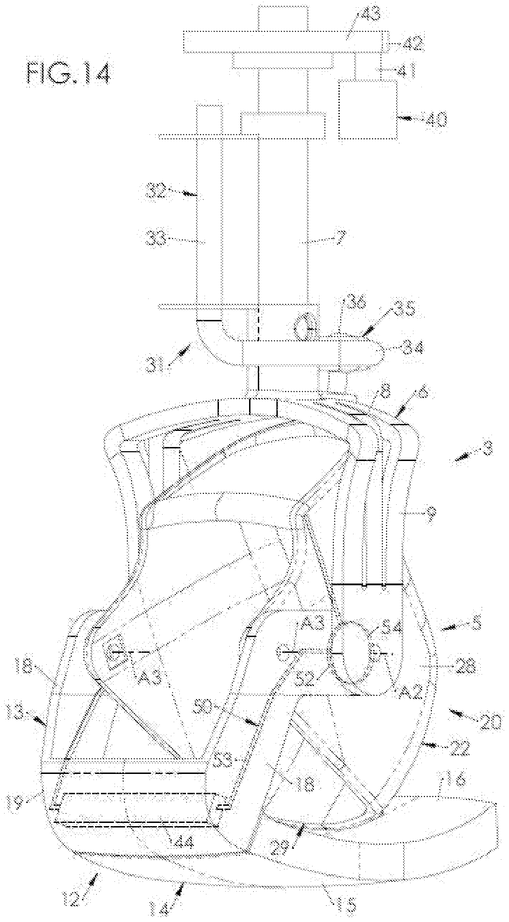

Selon un premier mode de réalisation, illustré sur les figures 13 et 14, le premier brin **51** est porté par le réflecteur **22.** Chacune des parois **28** latérale porte une première borne **52** (en l'espèce sous forme d'une pastille) raccordée à l'alimentation par un premier conducteur **55** (dont seule une partie est montrée sur les dessins), et l'optique **12** porte une paire de deuxièmes bornes **54,** chacune montée sur une branche **18,** sous forme d'une pastille entourant le deuxième axe **A2** horizontal de rotation et raccordée à la source **44** lumineuse secondaire par un deuxième conducteur **56** qui longe la branche **18.**

Comme on le voit sur la figure 14, chaque première borne **52** est placée sur une paroi **28** latérale du réflecteur **22** dans une position telle qu'en configuration de signalisation chaque deuxième borne **54** correspondante vient chevaucher la première borne **52** correspondante. On voit sur la figure 13 qu'en configuration de route, compte tenu de la mobilité de la lentille **14** par rapport au bloc **20** lumineux, chaque deuxième borne **54** est écartée de chaque première borne **52.**

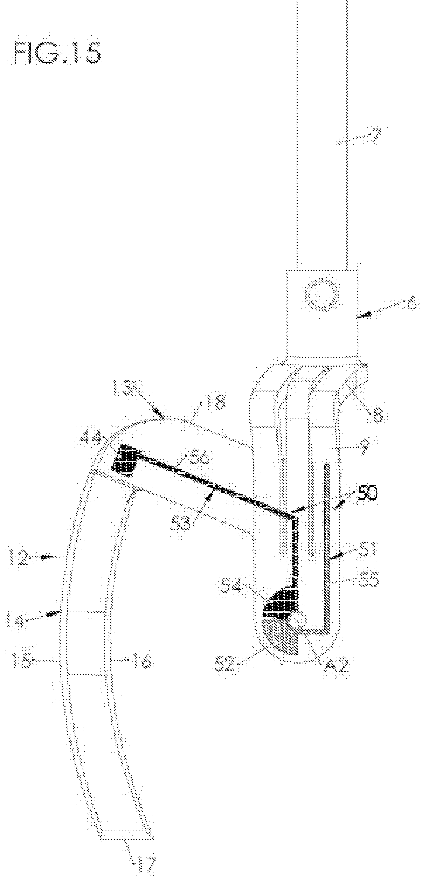

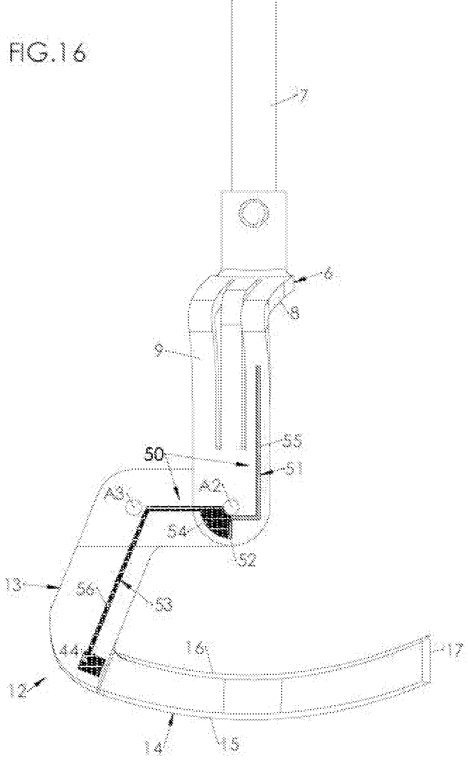

Selon un deuxième mode de réalisation illustré sur les figures 15 et 16, le premier brin **51** (en motif à nid d'abeille sur les figures 15, et 16) est porté par l'étrier **6.** Plus précisément, chaque bras **9** porte une première borne **52,** sous forme d'un secteur angulaire centré sur le deuxième axe **A2** de rotation.

Chaque branche **18** de la monture **13** porte une deuxième borne **54** du deuxième brin **53** (en grisé sur les figures 15 et 16) sous forme d'un secteur angulaire également centré sur le deuxième axe **A2** de rotation, de manière que, dans la configuration de route (c'est-à-dire dans l'orientation de route de l'optique **12**), les bornes **52, 54** soient écartées angulairement l'une de l'autre, ce qui ouvre le circuit **50** et coupe l'alimentation de la source **44** lumineuse secondaire (figure 13), tandis qu'en configuration de signalisation (c'est-à-dire dans l'orientation de signalisation de l'optique **12**), les bornes **52, 54** soient en contact par chevauchement pour fermer le circuit **50** électrique et ainsi alimenter la source **44** lumineuse secondaire.

Cette configuration du circuit **50** électrique permet de réaliser une bascule automatique (bien que mécanique) entre l'extinction la source **44** lumineuse secondaire en configuration de route (pour privilégier l'allumage de la source **21** lumineuse principale) et son allumage en configuration de signalisation, de sorte à éclairer la tranche **17** de la lentille **14** et/ou la zone **47** de diffusion du réflecteur **22.** On voit donc que l'allumage et l'extinction de la source **44** lumineuse secondaire sont accouplés, de manière simple et efficace, à l'orientation de l'optique **12.**

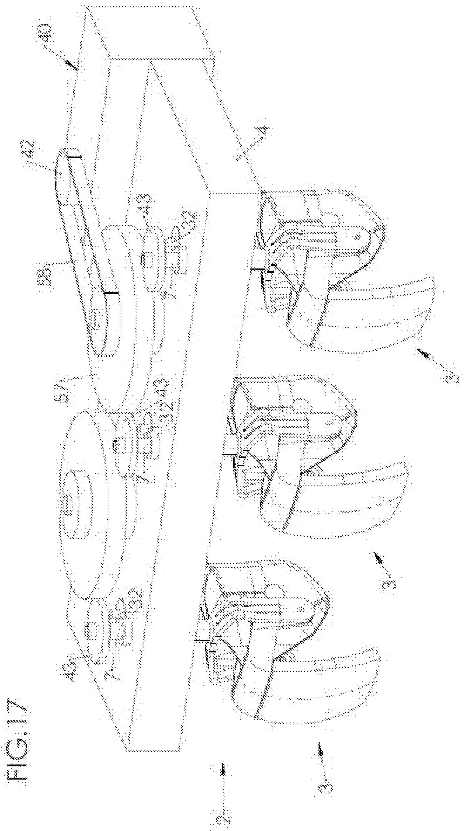

Le dispositif **3** d'éclairage qui vient d'être décrit peut être monté seul au sein d'un bloc **2 de** phare. Cependant, comme on l'a représenté sur la figure 17, un même bloc **2** de phare peut intégrer plusieurs dispositifs **3** d'éclairage de ce type, dont les armatures **6** (ou les bielles **32**) sont par exemple couplées en rotation. Il en résulte une synchronisation des dispositifs 3 d'éclairage, qui adoptent conjointement leurs configurations de route ou de signalisation. Le couplage peut être réalisé par une transmission mécanique, par exemple à engrenages (comme illustré), ou encore à chaîne ou courroie. Une seule motorisation **40** suffit à l'entraînement de l'ensemble. Dans l'exemple illustré, la motorisation **40** est couplée à une roue **57** d'entraînement au moyen d'une courroie **58.**

De même, dans l'exemple de la figure 17, les arbres principaux **7** des différents dispositifs **3** d'éclairage sont parallèles. Un tel parallélisme n'est cependant pas obligatoire, et les arbres **7** principaux pourraient être inclinés les uns par rapport aux autres, par exemple pour permettre, en position de signalisation, de réaliser un motif par aboutement des tranches **17** des différentes lentilles le long d'une ligne prédéterminée.

La mobilité des équipages **5** tels que décrit ci-dessus offre une fonctionnalité nouvelle en ce qui concerne les feux de signalisation DRL.

Ainsi, comme déjà décrit, en référence à l'exemple de réalisation de la figure 7, le faisceau lumineux, représenté en trait mixte, qui sort par la surface **17,** le long de l'axe optique O2, peut assurer la fonction de signalisation diurne DRL.

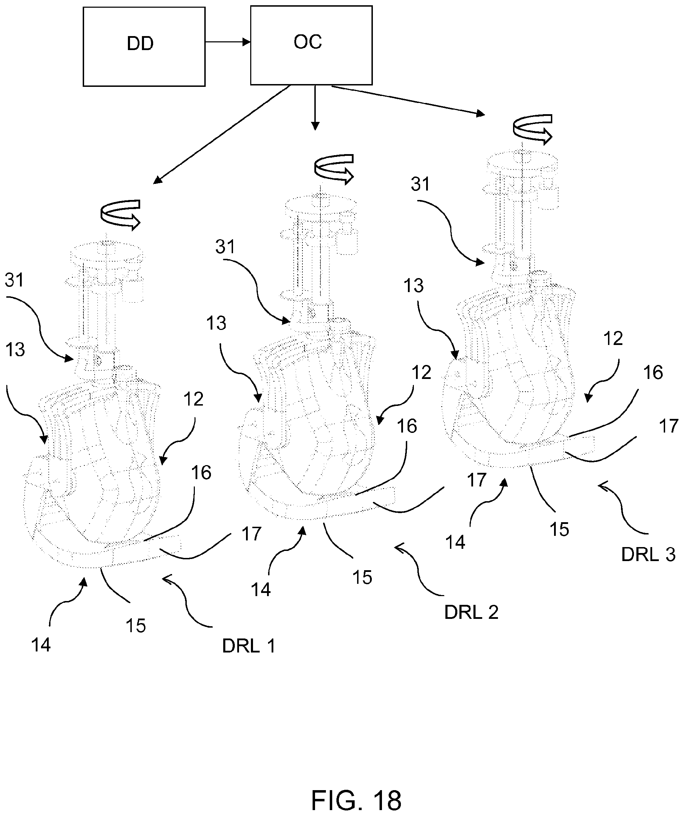

En partant de la position des trois équipages 5, illustrée à la figure 17, lorsque les trois équipages 5 sont commandés pour tourner de 180° autour de leur axe vertical jusqu'à une position illustré à la figure 18, les trois lentilles **14** peuvent contribuer à la distribution photométrique de la fonction DRL.

Ainsi, différentes configurations sont envisageables dans lesquelles la rotation individuelle de chacun des trois équipages répond à distribution photométrique règlementaire tout en offrant des plages d'observation plus étendues que celles offertes par une fonction de signalisation diurne statique.

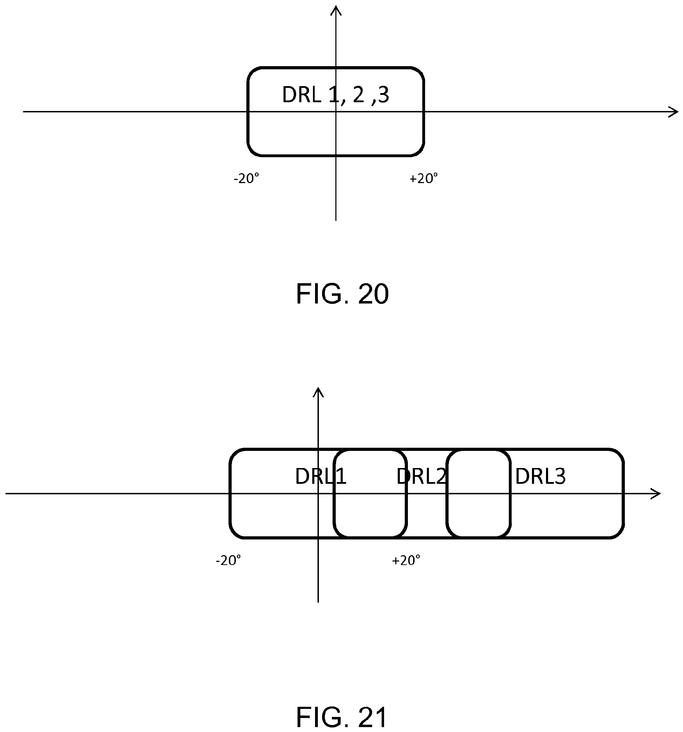

Deux exemples de configuration de la fonction diurne DRL dynamique sont illustrés respectivement aux figures 20 et 21.

La configuration de la figure 20, correspond à celle d'un feu de circulation diurne **DRL** statique de l'état de l'art, dans laquelle chacun des trois équipages **DRL1, 2 et 3** contribue pour 1/3 à la grille photométrique ; l'axe optique étant centré à l'intersection des axes vertical et horizontal correspond à l'axe longitudinal du véhicule.

La configuration de la figure 21, correspond quant à elle à celle d'un déplacement asservi, progressif, de chacun des trois équipages **5** au cours d'un virage, carrefours, routes sinueuses, manœuvres, ...

Au cours de ce déplacement, l'intensité relative des trois équipages **5** est rééchelonnée pour pouvoir respecter la grille réglementaire, dans l'axe et vers d'autres directions déterminées.

On réalise ainsi à partir de l'équipage mobile **5** décrit ci-dessus, un feu de circulation diurne DRL « dynamique » permettant d'optimiser la visibilité du véhicule par les piétons et autres véhicules dans l'environnement du véhicule porteur.

De manière avantageuse, le véhicule porteur est équipé d'un dispositif de détection **DD,** comme par exemple une caméra de détection et d'un organe de commande **OC** apte à piloter le mécanisme d'entraînement **31** pour autoriser le déplacement de l'optique **12** autour de l'orientation de signalisation en fonction de paramètres caractérisant l'environnement routier du véhicule **1.** La commande peut être effectuée, également, en utilisant comme information l'angle du volant.

Par exemple, l'organe de commande **OC** pilote le mouvement des trois équipages **5** et de l'intensité lumineuse de chacun des trois équipages **5** en cas de détection de présence et/ou de mouvements d'un véhicule ou piétons dans un voisinage proche du véhicule porteur **1** de manière à focaliser l'attention des conducteurs des autres véhicules et/ou piétons sur le véhicule porteur **1.**

Le cône (amplitude angulaire) de visibilité -20°, +20° est ainsi toujours respecté autour de l'axe ou direction orientée vers la cible (autre véhicule ou piéton). Ce cône de visibilité minimale peut être même élargi avantageusement, afin d'augmenter les conditions de visibilité du feu.

## Revendications

1. Véhicule (1) automobile comportant un dispositif (**3**) d'éclairage qui comprend :
- un châssis (**4**) ;
- une optique (**12**) comprenant une monture (**13**) et une lentille (**14**) solidaire de la monture (**13**), la lentille (**14**) ayant un dioptre (**15**) avant et un dioptre (**16**) arrière opposés reliés par une tranche (**17**), la monture (**13**) étant montée en rotation par rapport au châssis (**3**) ;
- un bloc (**20**) lumineux muni d'une source (**21**) lumineuse principale ;
- un mécanisme (**31**) d'entraînement de l'optique (**12**) en rotation, propre à placer l'optique (**12**) selon une orientation dite de route dans laquelle le dioptre (**15**) avant est tourné vers une direction dite avant ;
l'optique (**12**) étant munie d'une source (**44**) lumineuse secondaire, apte à éclairer la tranche (**17**) de la lentille (**14**) et le mécanisme (3**1**) d'entraînement étant agencé pour placer l'optique (**12**) selon une orientation dite de signalisation dans laquelle la tranche (**17**) est tournée vers l'avant ;
- ledit véhicule comportant en outre un dispositif de détection (**DD**) et un organe de commande (**OC**) apte à piloter le mécanisme d'entraînement (**31**) pour autoriser le déplacement de l'optique (**12**) autour de l'orientation de signalisation en fonction de paramètres caractérisant l'environnement routier du véhicule (**1**) ou en fonction de l'information de l'angle du volant.

2. Véhicule (**1**) selon la revendication 1, **caractérisé en ce que** la source (**44**) lumineuse secondaire est montée dans la lentille (**14**).

3. Véhicule (**1**) selon la revendication 2, **caractérisé en ce que** la source (**44**) lumineuse secondaire est montée à distance de la tranche (**17**), les dioptres (**15, 16**) formant un guide d'onde pour canaliser vers la tranche (**17**) le flux lumineux issu de la source (**44**) lumineuse secondaire.

4. Véhicule (**1**) selon l'une des revendications précédentes, **caractérisé en ce que** le bloc (**20**) lumineux comprend un réflecteur (**22**) définissant une face (**23**) interne concave réfléchissante en regard de laquelle la source (**21**) lumineuse principale est placée.

5. Véhicule (**1**) selon la revendication 4, **caractérisé en ce que**, dans l'orientation de route, le dioptre (**16**) arrière de la lentille (**14**) est placé en regard de la face (**23**) interne du bloc (**20**) lumineux.

6. Véhicule (**1**) selon l'une des revendications précédentes, **caractérisé en ce que** l'orientation de signalisation est décalée angulairement, par rapport à l'orientation de route, d'un angle de **180**° environ.

7. Véhicule (**1**) selon l'une des revendications précédentes, **caractérisé en ce que** :
- le dispositif (**3**) comprend une armature (**6**) montée en rotation par rapport au châssis (**4**) autour d'un premier axe (**A1**) vertical ;
- l'optique (**12**) est montée en rotation par rapport à l'armature (**6**) autour d'un deuxième axe (**A2**) horizontal ;
- l'optique (**12**) est montée en rotation par rapport au bloc (**20**) lumineux autour d'un troisième axe (**A3**) horizontal écarté du deuxième axe (**A2**) horizontal ;
- le mécanisme (**31**) d'entraînement comprend une bielle (**32**) munie d'un arbre (**33**) par lequel la bielle (**32**) est montée en rotation par rapport au châssis (**4**) autour d'un quatrième axe (**A4**) vertical écarté du premier axe (**A1**) vertical, et d'un levier (**34**) coudé par rapport à l'arbre (**33**), le levier (**34**) de la bielle (**32**) étant accouplé au bloc (**20**) lumineux par une liaison rotule (**35**).

8. Véhicule (**1**) selon l'une des revendications précédentes, **caractérisé en ce qu'**il comprend en outre une motorisation (**40**) couplée au mécanisme (**31**) d'entraînement.

## Patentansprüche

1. Kraftfahrzeug (1) mit einer Beleuchtungseinrichtung (3), die umfasst:
ein Chassis (4) ;
ein optisches System (12), das einen Rahmen (13) und eine mit dem Rahmen (13) einstückige Linse (14) umfasst, wobei die Linse (14) ein vorderes Diopter (15) und ein gegenüberliegendes hinteres Diopter (16) aufweist, die durch eine Kante (17) verbunden sind, wobei der Rahmen (13) so montiert ist, dass er sich in Bezug auf das Chassis (3) dreht;
einem Lichtblock (20), der mit einer Hauptlichtquelle (21) versehen ist;
einen Mechanismus (31) zum Drehantrieb der Optik (12), der in der Lage ist, die Optik (12) in eine sogenannte Straßenorientierung zu bringen, in der der vordere Diopter (15) in eine sogenannte Vorwärtsrichtung gedreht ist;
die Optik (12) mit einer sekundären Lichtquelle (44) versehen ist, die in der Lage ist, den Rand (17) der Linse (14) zu beleuchten, und der Antriebsmechanismus (31) so angeordnet ist, dass er die Optik (12) in eine sogenannte Signalisierungsorientierung bringt, in der der Rand (17) nach vorne gedreht ist;
- wobei das Fahrzeug außerdem eine Erfassungsvorrichtung (DD) und ein Steuerelement (OC) umfasst, das in der Lage ist, den Antriebsmechanismus (31) zu steuern, um die Bewegung der Optik (12) um die Signalausrichtung in Abhängigkeit von Parametern, die die Straßenumgebung des Fahrzeugs (1) charakterisieren, oder in Abhängigkeit von der Lenkradwinkelinformation zuzulassen.

2. Fahrzeug (1) nach Anspruch 1, **dadurch gekennzeichnet, dass** die Sekundärlichtquelle (44) in der Linse (14) montiert ist.

3. Fahrzeug (1) nach Anspruch 2, **dadurch gekennzeichnet, dass** die Sekundärlichtquelle (44) in einem Abstand von der Kante (17) angebracht ist, wobei die Diopter (15, 16) einen Wellenleiter zur Kanalisierung des Lichtstroms von der Sekundärlichtquelle (44) zur Kante (17) bilden.

4. Fahrzeug (1) nach einem der vorhergehenden Ansprüche, **dadurch gekennzeichnet, dass** der Lichtblock (20) einen Reflektor (22) aufweist, der eine reflektierende konkave Innenfläche (23) definiert, der die Hauptlichtquelle (21) gegenüberliegt.

5. Fahrzeug (1) nach Anspruch 4, **dadurch gekennzeichnet, dass** in der Straßenlage der hintere Diopter (16) der Linse (14) gegenüber der Innenfläche (23) des Lichtblocks (20) angeordnet ist.

6. Fahrzeug (1) nach einem der vorhergehenden Ansprüche, **dadurch gekennzeichnet, dass** die Signalisierungsausrichtung gegenüber der Straßenausrichtung um einen Winkel von etwa 180° winklig versetzt ist.

7. Fahrzeug (1) nach einem der vorhergehenden Ansprüche, **dadurch gekennzeichnet, dass** :
die Vorrichtung (3) einen Rahmen (6) umfasst, der relativ zum Chassis (4) um eine erste vertikale Achse (A1) drehbar gelagert ist;
das optische System (12) ist relativ zum Rahmen (6) um eine zweite horizontale Achse (A2) drehbar gelagert;
die Optik (12) ist in Bezug auf den Leuchtblock (20) um eine dritte horizontale Achse (A3) in einem Abstand von der zweiten horizontalen Achse (A2) drehbar gelagert;
der Antriebsmechanismus (31) eine Pleuelstange (32) umfasst, die mit einer Welle (33) versehen ist, mittels der die Pleuelstange (32) in Bezug auf das Chassis (4) um eine vierte vertikale Achse (A4), die von der ersten vertikalen Achse (A1) beabstandet ist, drehbar montiert ist, und einen Hebel (34), der in Bezug auf die Welle (33) abgewinkelt ist, wobei der Hebel (34) der Pleuelstange (32) mit dem Leuchtblock (20) durch ein Kugelgelenk (35) gekoppelt ist.

8. Fahrzeug (1) nach einem der vorhergehenden Ansprüche, **dadurch gekennzeichnet, dass** es ferner eine mit dem Antriebsmechanismus (31) gekoppelte Motorisierung (40) aufweist.

## Claims

1. A motor vehicle (1) having a lighting device (3) which comprises :
a chassis (4) ;
an optical system (12) comprising a frame (13) and a lens (14) integral with the frame (13), the lens (14) having a front diopter (15) and an opposite rear diopter (16) connected by a flange (17), the frame (13) being mounted so as to rotate relative to the chassis (3);
a light block (20) provided with a main light source (21);
a mechanism (31) for driving the optics (12) in rotation, capable of placing the optics (12) in a so-called road orientation in which the front diopter (15) is turned towards a so-called forward direction;
the optics (12) being provided with a secondary light source (44) capable of illuminating the edge (17) of the lens (14) and the drive mechanism (31) being arranged to place the optics (12) in a so-called signalling orientation in which the edge (17) is turned forwards;
- said vehicle further comprising a detection device (DD) and a control member (OC) capable of controlling the drive mechanism (31) to authorize the movement of the optics (12) around the signalling orientation as a function of parameters characterizing the road environment of the vehicle (1) or as a function of the steering wheel angle information.

2. Vehicle (1) according to claim 1, **characterized in that** the secondary light source (44) is mounted in the lens (14).

3. Vehicle (1) according to claim 2, **characterized in that** the secondary light source (44) is mounted at a distance from the edge (17), the diopters (15, 16) forming a waveguide for channelling the luminous flux from the secondary light source (44) to the edge (17).

4. Vehicle (1) according to one of the preceding claims, **characterized in that** the light block (20) comprises a reflector (22) defining a reflecting concave internal face (23) opposite which the main light source (21) is placed.

5. Vehicle (1) according to claim 4, **characterized in that**, in the road orientation, the rear diopter (16) of the lens (14) is placed opposite the inner face (23) of the luminous block (20).

6. Vehicle (1) according to one of the preceding claims, **characterized in that** the signalling orientation is angularly offset with respect to the road orientation by an angle of approximately 180°.

7. Vehicle (1) according to one of the preceding claims, **characterized in that**:
the device (3) comprises a frame (6) mounted in rotation with respect to the chassis (4) about a first vertical axis (A1) ;
the optics (12) is mounted so as to rotate relative to the frame (6) about a second horizontal axis (A2);
the optics (12) is mounted so as to rotate with respect to the luminous block (20) about a third horizontal axis (A3) at a distance from the second horizontal axis (A2);
the drive mechanism (31) comprises a connecting rod (32) provided with a shaft (33) by which the connecting rod (32) is mounted so as to rotate with respect to the frame (4) about a fourth vertical axis (A4) spaced from the first vertical axis (A1), and a lever (34) angled with respect to the shaft (33), the lever (34) of the connecting rod (32) being coupled to the luminous block (20) by a ball-and-socket joint (35).

8. Vehicle (1) according to one of the preceding claims, **characterized in that** it further comprises a motorization (40) coupled to the drive mechanism (31).
